(19) **Europäisches Patentamt / European Patent Office / Office européen des brevets**

(11) **EP 1 719 972 B1**

(12) **EUROPEAN PATENT SPECIFICATION**

(45) Date of publication and mention
of the grant of the patent:
**18.03.2009 Bulletin 2009/12**

(51) Int Cl.:
**G01B 11/16** (2006.01)   **B23K 26/00** (2006.01)

(21) Application number: **06252281.8**

(22) Date of filing: **28.04.2006**

(54) **A method for measuring deformations in test specimens**

Verfahren zur Erfassung von Probendeformationen

Méthode de mesure des déformations des spécimens d'essai

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.05.2005 US 676848 P**
**24.04.2006 US 410180**

(43) Date of publication of application:
**08.11.2006 Bulletin 2006/45**

(73) Proprietor: **Cordis Corporation**
**Miami Lakes, FL 33014 (US)**

(72) Inventors:
• **Grishaber, Randy-David B.**
**Asbury, NJ 08802 (US)**

• **Krever, Matthew**
**Warren, NJ 07059 (US)**
• **Olsen, Daniel**
**Califon, NJ 07830 (US)**

(74) Representative: **Gover, Richard Paul et al**
**Urquhart-Dykes & Lord LLP**
**Tower North Central**
**Merrion Way**
**Leeds LS2 8PA (GB)**

(56) References cited:
| | |
|---|---|
| **EP-A- 0 727 640** | **EP-A- 0 843 157** |
| **WO-A-01/54854** | **DE-A1- 3 042 650** |
| **US-A- 3 628 866** | **US-A1- 2004 143 975** |
| **US-A1- 2005 079 499** | |

## Description

The present invention relates to a process for measuring test specimens in order to determine the deformation properties of the test specimen, including the measurement of macro and micro deformations in the test specimens.

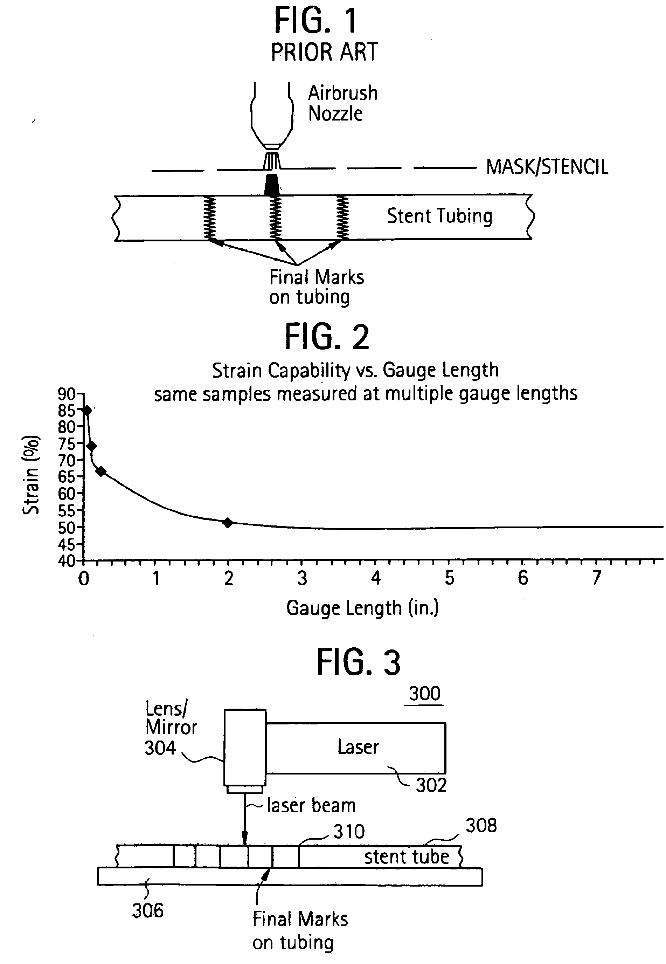

Currently utilized deformation measurement techniques, as illustrated in Figure 1, utilize an airbrush and stencil marking system in order to create a series of spaced reference marks of known separation on the specimen to be tested. The distance between these marks is referred to as the gauge length and each mark is referred to as a gauge mark.

Prior methods for marking test specimens, such as sheets, bars and tubes for deformation testing such as tensile testing and elongation testing measurement have a number of drawbacks. For example, certain marking techniques, such as chemical etching and mechanical scratching, may actually alter the surface of the sample to the point where premature failures are induced, thus the test preparation negatively impacts test results. In addition, common marking techniques used to avoid surface damage, such as spray painting, produce marks which may have poorly defined edges, which may reduce the repeatability and precision of measurements, and due to this the minimum spacing of the marks is limited. In addition, these types of marks may be difficult to visualize because of a lack of contrast.

The present invention overcomes the difficulties associated with currently utilized processes as briefly described above.

EP 0,843,157 discloses a method for measuring deformations on plant components. It discloses the use of moire interferometrics to measure deformations. These techniques as based upon the use of grids provided on test specimens.

US 3,628,866 relates to a non-contacting method for measuring strain in a work piece. The strain measurements are based on an optical diffraction grating produced by interfering beams from a giant pulse laser. This enables thermal engraving of diffraction gratings on irregularly shaped surfaces.

EP 0,727,640 discloses an optical distance measurement system. The optical distance measurement system measures the distance between a plurality of deflective markers located along a optical fibre.

DE 3,042,650 discloses a method of applying a coating to a substrate, such as glass, and using a laser or electron beam to produce markings on the coating.

US publication number 2005/0079499 discloses a method and apparatus to produce a pattern on a substrate. Marks can be produced by a laser treatment device controllable by a controller.

PCT publication number WO01/54854 discloses a laser scanning method and system for marking articles. A focussed laser beam is used to mark a predetermined region of a article in response to deflection control signals.

In accordance with the present invention there is provided a method of measuring deformations in test specimens comprising: marking at least one test specimen formed from a polycrystalline material with one or more high resolution gauge marks; deforming the at least one test specimen; and measuring a positional change between the one or more high resolution gauge marks; wherein the or each gauge mark has a depth that extends into the or each test specimen to no more than one half the grain size of the test specimen.

The present invention may utilize an energy based device such as a laser to create fine lines, or other fiducial delineations or gauge marks for measurement taking. Due to the precise control available from the laser marking system of the present invention, the energy delivered to the specimen surface may be controlled to the degree that premature failures at the marking points are significantly reduced or eliminated. The presently described system accomplishes this through the production of marks which impact the sample's surface to no more than one half the grain size of the test specimen, for polycrystalline materials. The laser marks are extremely well defined with precise edges and narrow total width, for example, less than one thousandth of an inch so that they may be more precisely measured for post-test gauge lengths and spaced more tightly. With the appropriate laser, total widths of less than ten microns may be achieved.

The present invention is directed to a novel method for improving the determination of elongation (i.e., strain carrying) capability of tubular or other shaped test specimens. In order to determine elongation of a material being tensile tested, a change in gauge length from the pre-tensile tested to the post-tensile tested state needs to be ' measured. Strain is defined as the change in length of the specimen divided by the original length of the specimen. This relationship may be formulaically represented as

$$E - dL / Lo,$$

where E is strain, dL is change in length, and Lo is original specimen length.

The step of marking test samples may be accomplished via a laser marking device which produces extremely fine, well-defined marks which facilitate more accurate gauge length measurement and tighter/smaller spacing of the gauge marks.

In accordance with the present invention the test specimen, for example, a tube is placed under the laser marking system (a commercially available galvo device such as the Rofin EasyMark) on a fixture long enough to support the entire length of the sample. A one axis, servo or stepper motor controlled platform moves the tube underneath the laser head in a direction aligned with the tube sample's primary axis (the indexing direction). The index distance is based on the desired gauge length. The laser can image in two axes that allows it to place the marks transverse to the axis of the tube and indexing motion that produces a gauge length mark of suitable quality for measurement and appropriate spacing.

The method may utilize any number of marking techniques, any number of energy based marking devices capable of producing high resolution gauge marks and any number of measuring devices on a multitude of test specimens of varying size, shape, and composition. For ease of explanation, however, an exemplary embodiment is described with respect to a metallic tubular structure suitable for the manufacture of intravascular devices such as stents. In addition, although any type of marking device may be utilized, the exemplary embodiment is described with a laser as the marking device.

The present invention may utilize an energy based device such as a laser to create fine line delineations or gauge marks for measurement taking. Due to the precise control available from the laser marking system, the energy delivered to the specimen surface may be controlled to the degree that premature failures at the marking points are significantly reduced or eliminated. The laser marks are extremely well-defined with precise edges and narrow total width, for example, less than 0.003 mm (one thousandth of an inch) so that they may be more precisely measured for post-test gauge lengths and spaced more tightly. With the appropriate laser, widths of less than 10 $\mu$m (ten microns) may be achieved.

High resolution marking and spacing is what truly makes this improved measurement method valuable. For small diameter, thin walled tubes, a significant portion of the plastic deformation that occurs during tensile testing happens over a very short (as measured in the tube-axial direction) distance (< 3.18 mm (0.125 inches)). If gauge marks are placed too far apart, the change in length of the specimen due to this necking elongation is not captured during typical elongation measurement. Instead what is measured is the bulk elongation of the material. Since most devices made from thin walled metal tube contain dimensions well under this length scale (typically in the 0.051 - 0.254 mm (0.002 - 0.010 inch) size range), accurately capturing the maximum elongation possible from the material at this scale is critical for proper characterization of the material and device.

For plastically deformable devices like stents, higher elongation capability is desirable, since it allows for more expansion of a device to accommodate clinicians' needs without device failure. If the elongation capability of the material at this length scale is not known during device design, overly conservative assumptions based on the bulk elongation properties of the material must be used in device design and analysis, which leads to lower performing designs (e.g. lesser stent crimping and overexpansion capability).

It has been shown through experimentation (at 203 mm, 51 mm and 6.35 mm (8 inches, 2 inches, and ¼ inch) gauge lengths) and extrapolation that as the gauge length spacing becomes smaller (and better scaled to capture the necking elongation of the test sample), that the actual measured elongation will increase. Figure 2 illustrates a plot of elongation increase trend. One can see that as gauge length gets smaller the increase in elongation measured can be dramatic as more of the necking strain is captured. Thus, the value of the present invention becomes clear. The present invention allows for both lower measurement noise/error (due to finer more controlled marks), and more tightly spaced gauge marks, which allows for smaller gauge lengths.

Therefore, the present invention enables the direct quantification and documentation of higher elongation capabilities for material configurations than has previously been possible. This allows for higher performing stent designs (or other plastically deformable devices) to be created.

In addition, by use of the precision laser illumination source, a thermodynamically stable oxide may be grown from the native surface when the marking is conducted within an oxidative environment. Intrinsic to the nature of thin ceramic films that are grown from the base material, the resultant oxide film will be strongly adherent to the interfacial (i.e. material to oxide) basal plane. As the surface evolves under applied long-range stress (e.g. that induced under a uniaxial state by the tensile tester), the marked surface grains (i.e. discrete monocrystallographic structures that combine to form the overall polycrystalline tube) slide, rotate and/or deform to provide a form of structural stress relief. The present invention provides for a tenaciously adherent surface marking to be attached to each of these discrete surface grains thereby providing for accurate determination of surface grains both on a macro (or long-range) basis to track overall and modestly localized strains between the principal gage marks. In addition, the individualized marking of each discrete grain provides for the opportunity to track localized surface strains on the granular level so as to provide a meso to micro perspective when evaluating imparted deformation to the tube and/or specimen under test.

In accordance with the present invention, the test specimens may be coated with any number of suitable coating materials that serve a number of functions. For example, the test specimens to be measured may be coated with a material that creates an optimal ablation environment so that the energy from the energy source (laser) does not heat the base material comprising the test specimen while creating or cutting the gauge marks or delineations. In other words, by judicious selection of a coating material and/or control over the energy source (frequency, amplitude, power) gauge marks or other delineations may be made in the coating material which absorbs the energy from the energy source with minimal transmission to the underlying base material comprising the test specimen, thereby shielding the base material from any deleterious effects that may be produced by the energy source. One such coating material or layer is the oxide layer described above.

In addition to utilizing any suitable coating, any suitable coating technique may be utilized to apply the coating material to the base test specimen. For example, depending upon the base material, the coating material and the derived thickness of the coating, the coating material may be applied utilizing any number of well known techniques including airbrush spray painting, anodizing and/or dip coating. The depth or thickness of the coating is an important factor as is explained in detail subsequently. Regardless of the coating material and the coating application process, it is important that the coating be a conformal coating that moves with the base material comprising the test specimen on both the macro and microscopic scale such that as the base material is manipulated or deformed, the coating deforms in a manner as precisely as the underlying base material. For example, if the test specimen is stretched a predetermined distance, then the coating should stretch the same predetermined distance so that the measurements are accurate. Typical conformal coatings include Parylene, silicone, acrylic, urethane and epoxy.

In a slight variation, the energy source may be utilized to bond the coating material to the surface of the base material comprising the test specimen at the points of demarcation or delineation while the portions not exposed to the energy source may be removed utilizing a particular solvent. In this particular variation, raised gauge marks or delineations are formed utilizing energy based bonding. This variation results in an embossed surface. This particular variation is similar to the creation of semiconductor mask works utilizing photoresist and is well known in the semiconductor fabrication art.

In addition to the coating being conformal, it is preferable that the coating material be a material that is in stark contrast to the underlying base material comprising the test specimen, or at least becomes a color or texture that is in stark contrast to the base material when exposed to the energy source. A stark contrast will make it easier to read and/or measure the delineations.

If no coating is utilized, the energy source may be utilized in the production of gauge marks which impact the test specimen's surface to no more than one half the grain size of the test specimen for polycrystalline materials. If a laser is utilized as the energy source, the laser marks are extremely well defined with precise edges and narrow total widths, for example, less than one thousandth of an inch so that they may be more precisely measured for post-test gauge length and spaced more tightly. Obviously, the closer the spacing, the more precise the measurement. With the appropriate laser and optics, total widths of less than 10 $\mu$m (ten microns) may be achieved. In other words, ultra high resolution gauge marks may be formed with a width of no lesser than the wavelength of the energy source to create the gauge marks or delineations, which may be less than ten microns, for example, on the order of about 2 $\mu$m (two microns). The higher the resolution of the energy source, the higher degree of control over the size and shapes of the marks. It is important to note that this applies to coated as well as non-coated surfaces; however; non-coated or uncoated surfaces are subject to potential deleterious effects as described herein.

While the width and spacing of the gauge marks or delineations are important, the depth of the gauge marks or delineations are also important. The less invasive the gauge mark, the less likely is the gauge mark to change the characteristics of the underlying base material and thus lessen its impact on the test results. Accordingly, while controlling the depth as described herein is important, the use of coatings as described above may lessen the impact of potential base material surface modifications. In other words, the use of coatings may result in substantially no possibility of altering the characteristics of the underlying base material. For example, in one exemplary embodiment, the energy source may be set to cut or ablate to a depth equal to that of the coating material such that the underlying test specimen surface is exposed but not touched. Alternately, the energy source may be set to cut or ablate to a depth only partially through the coating material, thereby, creating a mark or delineation in the coating material only. In yet another alternate embodiment, the energy source may be set to cut or ablate through the coating material and just into the surface of the underlying test specimen. While the surface of the test specimen is marked, it is to a much less extent than what would be required in a non-coated test specimen. As is seen, the depth of a coated or uncoated test specimen may be varied to suit a particular need. The depth of cut depends on a number of factors, including the underlying material, the coating material and the energy source. However, in the method according to the invention the or each gauge mark has a depth that extends into the or each test specimen to no more than half the grain size of the test specimen

The following examples helpful to understand the invention will now be described by way of example with reference to the accompanying drawings, in which:

Figure 1 is a diagrammatic representation of a prior art system for marking test specimens.

Figure 2 is a graphical illustration of strain capability versus gauge length.

Figure 3 is a diagrammatic representation of a system for marking which may be used in accordance with the present invention.

Figure 4a is a diagrammatic representation of a first exemplary indexing device which may be used in accordance with the present invention.

Figure 4b is a diagrammatic representation of a second exemplary indexing device which may be used in accordance with the present invention.

Figure 5a is an image of a tubular specimen with airbrush gauge marks prior to testing.

Figure 5b is an image of the tubular specimen of Figure 5a after testing.

Figure 5c is an image of a tubular specimen with gauge marks made in accordance with the present invention prior to testing.

Figure 5d is an image of the tubular specimen of Figure 5c after testing.

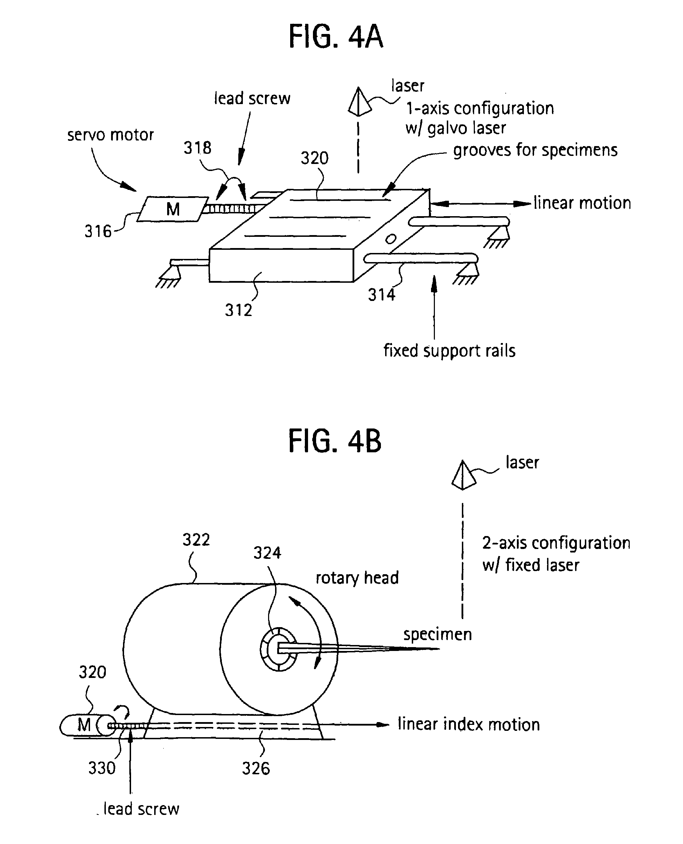

Referring to Figure 3, there is illustrated an exemplary system 300 in accordance with the present invention. The system 300 comprises an energy based marking device 302, such as a laser, an energy directing/focusing apparatus 304, such as a lens and mirror arrangement, and an indexing device 306, such as a servo motor driven linear stage fitted with grooves and clamps to hold test specimens. Also illustrated is a specimen 308 with gauge marks 310 produced by the laser 302. Figures 4a and 4b are detailed illustrations of two types of indexing devices 306. In a first exemplary embodiment, illustrated in Figure 4a, the indexing device 306 comprises a moveable stage 312, fixed support rails 314 upon which the stage 312 moves, and a motor 316 connected to the stage 312 by a lead screw 318. The stage 312 comprises one or more grooves 320 to hold the test specimens. Figure 4b illustrates an alternate exemplary embodiment and is described in detail subsequently.

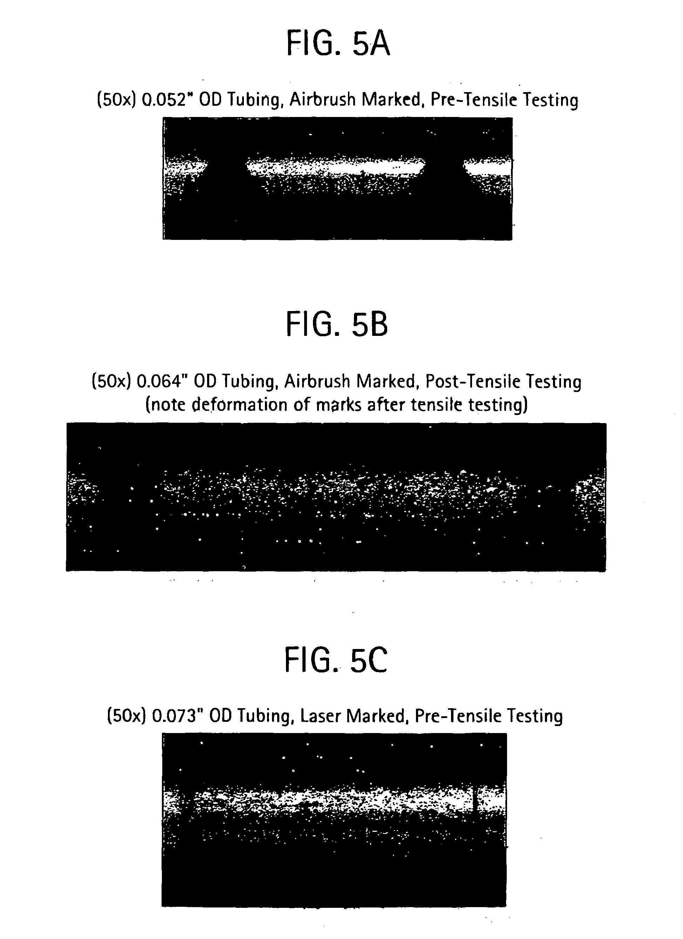

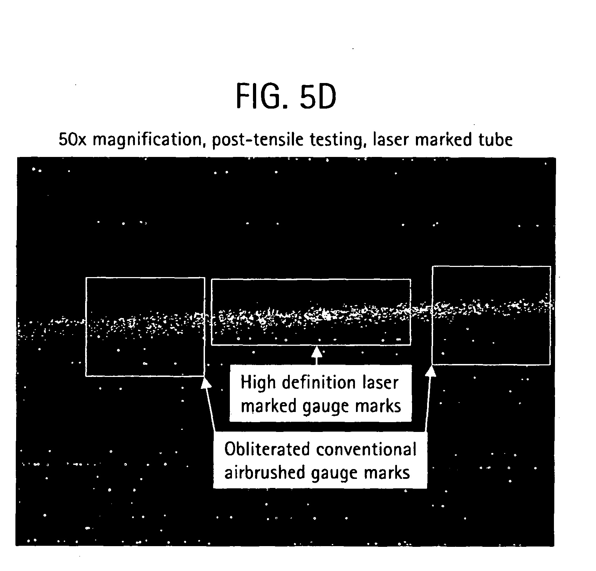

Figure 5a and 5b illustrate tubular specimens marked with airbrush techniques. Figure 5a is the specimen pre-tensile testing and Figure 5b is post-tensile testing. As can be seen there is a substantial difference between the gauge marks. Figures 5c and 5d illustrate tubular specimens marked in a step of the method according to the present invention. As can be seen, the gauge marks are cleaner and finer both pre and post testing.

To facilitate measurement of extremely small gauge length marks (which is possible with present invention), SEM microscopy could be used for specimen measurement in addition to traditional light microscopy or magnification techniques.

This method could be used to improve the tensile testing of non-tubular geometry samples such as wire or bar.

This method could be used to improve the tensile testing of non-metallic samples such as polymers or ceramics.

This method could be used to improve the deformation testing of complex multiaxial deformation tested samples such as stamped sheet metal.

Figure 4b illustrates an alternate exemplary embodiment of an indexing device 306. In this exemplary embodiment, the device 306 comprises a rotary head 322, a clamping mechanism 324 positioned within the rotary head 322 to hold the specimen, a linear stage 326 and a motor 328 connected to the linear stage 321 via a lead screw 330. The rotary head 322 includes a motor, not illustrated. In this exemplary embodiment, the specimen under test may be moved linearly and/or rotationally. In other words, the energy based marking system could also be comprised of a fixed position energy based marking device with a positioning fixture that has at least two axes of motion: a rotary motion and a linear motion. This would allow for the creation of complex gauge mark shapes on the test specimens. For example, a single spiral line may be created rather than a series of lines.

## Claims

1. A method for measuring deformations in test specimens (308) comprising:

   marking at least one test specimen (308) formed from a polycrystalline material with one or more high resolution gauge marks (310);
   deforming the at least one test specimen (308); and
   measuring a positional change between the one or more high resolution gauge marks (310);
   wherein the or each gauge mark (310) has a depth that extends into the or each test specimen (308) to no more than one half the grain size of the test specimen (308).

2. The method for measuring deformations in test specimens (308) according to claim 1, wherein said marking comprises marking at least one test specimen (308) with one or more gauge marks (310) utilizing electromagnetic energy.

3. The method for measuring deformations in test specimens (308) according to claim 1 or claim 2 further comprising:

   coating at least one test specimen (308) with a coating material.

4. The method for measuring deformations in test specimens (308) according to any one of the preceding claims, wherein the gauge marks (310) have a width greater than or equal to a wavelength of the electromagnetic energy.

5. The method for measuring deformations in test specimens (308) according to any one of the preceding claims, wherein the gauge marks (310) have a spacing equal to or greater than the wavelength of the electromagnetic energy.

6. The method for measuring deformations in test specimens (308) according to any claim dependent on claim 3, wherein the depth of the one or more gauge marks (310) is less than a thickness of the coating material.

7. The method for measuring deformations in test specimens (308) according to claim 4 or claim 5 when dependent on claim 3, wherein the depth of the one or more gauge marks (310) is equal to a thickness of the coating material.

8. The method for measuring deformations in test specimens (308) according to claim 4 or claim 5 when dependent on claim 3, wherein the depth of the one or more gauge marks (310) is greater than a thickness of the coating material.

**Patentansprüche**

1. Verfahren zum Erfassen von Deformationen in Proben (308), das Folgendes umfasst:

   Markieren von wenigstens einer Probe (308), die aus einem polykristallinen Material gebildet ist, mit einer oder mehreren hochauflösenden Messmarkierungen (310);
   Deformieren der wenigstens einen Probe (308); und
   Erfassen einer Positionsänderung zwischen der einen oder den mehreren hochauflösenden Messmarkierungen (310);
   wobei die oder jede Messmarkierung (310) eine Tiefe aufweist, die sich in die oder jede Probe (308) mit nicht mehr als einer halben Korngröße der Probe (308) erstreckt.

2. Verfahren zum Erfassen von Deformationen in Proben (308) nach Anspruch 1, bei welchem das Markieren ein Markieren von wenigstens einer Probe (308) mit einer oder mehreren Messmarkierungen (308) unter Verwendung von elektromagnetischer Energie umfasst.

3. Verfahren zum Erfassen von Deformationen in Proben (308) nach Anspruch 1 oder 2, das weiterhin Folgendes umfasst:

   Beschichten von wenigstens einer Probe (308) mit einem Beschichtungsmaterial.

4. Verfahren zum Erfassen von Deformationen in Proben (308) nach einem der vorhergehenden Ansprüche, bei welchem die Messmarkierungen (310) eine Breite aufweisen, die größer oder gleich der Wellenlänge der elektromagnetischen Energie ist.

5. Verfahren zum Erfassen von Deformationen in Proben (308) nach einem der vorhergehenden Ansprüche, bei welchem die Messmarkierungen (310) einen Abstand aufweisen, der gleich oder größer der Wellenlänge der elektromagnetischen Energie ist.

6. Verfahren zum Erfassen von Deformationen in Proben (308) nach einem der von Anspruch 3 abhängenden Ansprüche, bei welchem die Tiefe der einen oder mehreren Messmarkierungen (310) kleiner ist als die Dicke des Beschichtungsmaterials.

7. Verfahren zum Erfassen von Deformationen in Proben (308) nach Anspruch 4 oder 5 mit Rückbezug auf Anspruch 3, bei welchem die Tiefe der einen oder mehreren Messmarkierungen (310) gleich der Dicke des Beschichtungsmaterials ist.

8. Verfahren zum Erfassen von Deformationen in Proben (308) nach Anspruch 4 oder 5 mit Rückbezug auf Anspruch 3, bei welchem die Tiefe der einen oder mehreren Messmarkierungen (310) größer ist als die Dicke des Beschichtungsmaterials.

**Revendications**

1. Procédé de mesure de déformations dans des spécimens d'essai (308) comprenant :

   ■ le marquage d'au moins un spécimen d'essai (308) formé en un matériau polycristallin avec une ou plusieurs marque(s) de référence à haute résolution (310) ;
   ■ la déformation du au moins un spécimen d'essai (308) ; et
   ■ la mesure d'un changement de position entre la ou les marque(s) de référence à haute résolution (310) ;

   dans lequel la ou chaque marque de référence (310) possède une profondeur qui s'étend dans le ou chaque spécimen d'essai (308) jusqu'à la moitié de la dimension granulométrique du spécimen d'essai (308) au maximum.

2. Procédé de mesure de déformations dans des spécimens d'essai (308) selon la revendication 1, dans lequel ledit marquage comprend le marquage d'au moins un spécimen d'essai (308) avec une ou plusieurs marque(s) de référence (310) en utilisant une énergie électromagnétique.

3. Procédé de mesure de déformations dans des spécimens d'essai (308) selon la revendication 1 ou la revendication 2 comprenant en outre :

   l'enrobage d'au moins un spécimen d'essai (308) avec un matériau de revêtement.

4. Procédé de mesure de déformations dans des spécimens d'essai (308) selon l'une quelconque des revendications précédentes, dans lequel les marques de référence (310) possèdent une largeur supérieure ou égale à une longueur d'onde de l'énergie électromagnétique.

5. Procédé de mesure de déformations dans des spécimens d'essai (308) selon l'une quelconque des revendications précédentes, dans lequel les marques de référence (310) possèdent un espacement égal ou supérieur à la longueur d'onde de l'énergie électromagnétique.

6. Procédé de mesure de déformations dans des spécimens d'essai (308) selon l'une quelconque des revendications dépendant de la revendication 3, dans lequel la profondeur de la ou des marque(s) de référence (310) est inférieure à une épaisseur du matériau de revêtement.

7. Procédé de mesure de déformations dans des spécimens d'essai (308) selon la revendication 4 ou la revendication 5 lorsqu'elle dépend de la revendication 3, dans lequel la profondeur d'une ou plusieurs marque(s) de référence (310) est égale à une épaisseur du matériau de revêtement.

8. Procédé de mesure de déformations dans des spécimens d'essai (308) selon la revendication 4 ou la revendication 5 lorsqu'elle dépend de la revendication 3, dans lequel la profondeur d'une ou plusieurs marque(s) de référence (310) est supérieure à une épaisseur du matériau de revêtement.

# FIG. 1
## PRIOR ART

Airbrush
Nozzle

—————— MASK/STENCIL

Stent Tubing

Final Marks
on tubing

# FIG. 2

Strain Capability vs. Gauge Length
same samples measured at multiple gauge lengths

Strain (%)

Gauge Length (in.)

# FIG. 3

300

Lens/
Mirror
304

Laser

302

laser beam

310    308

stent tube

306

Final Marks
on tubing

# FIG. 4A

servo motor — lead screw — laser 1-axis configuration w/ galvo laser — grooves for specimens — linear motion — 318 — 320 — 316 — 312 — 314 — fixed support rails

# FIG. 4B

laser — 322 — 324 — rotary head — 2-axis configuration w/ fixed laser — specimen — 320 — linear index motion — M — 330 — 326 — lead screw

# FIG. 5A

(50x) 0.052" OD Tubing, Airbrush Marked, Pre-Tensile Testing

# FIG. 5B

(50x) 0.064" OD Tubing, Airbrush Marked, Post-Tensile Testing
(note deformation of marks after tensile testing)

# FIG. 5C

(50x) 0.073" OD Tubing, Laser Marked, Pre-Tensile Testing

# FIG. 5D

50x magnification, post-tensile testing, laser marked tube

High definition laser marked gauge marks

Obliterated conventional airbrushed gauge marks

**EP 1 719 972 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0843157 A
- US 3628866 A
- EP 0727640 A
- DE 3042650
- US 20050079499 A
- WO 0154854 A